# EUROPEAN PATENT APPLICATION

(11) **EP 2 444 308 A1**
(43) Date of publication of application: **25.04.2012**
(21) Application number: 10788594.9
(22) Date of filing: 13.06.2010
(51) Int. Cl.: B62K 17/00, B62K 15/00

(54) **FOLDABLE SCOOTER**

(30) Priority: 15.06.2009 CN 200910147827
(71) Applicant: Tai, Ju, Beijing 100091 (CN)
(72) Inventor: Tai, Ju, Beijing 100091 (CN)
(74) Representative: Karlsson, Leif Gunnar Börje
(86) International application number: PCT/CN2010/000854
(87) International publication number: WO 2010/145198

(57) **Abstract**

A foldable scooter comprises a pedal unit for the user, wheels mounted on both ends of the pedal unit, and a steering column arranged on the front of the pedal unit. The pedal unit comprises a front pedal and a back pedal, both of which are connected with each other through a folding mechanism. The wheels include a front wheel and a rear wheel which are fixed on the front pedal and the back pedal, respectively. The folding mechanism comprises unfolding locking parts for fixing the unfolded front pedal and the unfolded back pedal, and also includes a folding locking part for fixing the folded front and the folded back pedals. After being folded, the front wheel and the rear wheel contact with the ground and roll synchronously, and running tracks of the front wheel and the rear wheel are spaced with certain distance. The folding mechanism further includes a hinge arranged between the front pedal and the back pedal, and the front pedal is foldable around the hinge towards the back pedal, or the back pedal is foldable around the hinge towards the front pedal; and the orientation that the hinge extends is parallel with the plane in which the pedal unit extends, and forms an acute angle to the connection line between the front wheel and the rear wheel. The foldable scooter can be placidly towed and is convenient to carry, thereby saving the labor.

## Description

### Field of invention

The present invention relates to recreation equipment, in particular a foldable scooter.

### Background of invention

Currently, the scooter (or Bicman) has become a very popular equipment for recreation and body-building, which comprises a long board pedal unit (or skateboard) for users to step on, wheels mounted on both ends of the pedal unit (generally wheels mounted on both the front end and the back end of the pedal unit), a front column arranged on the front end of the pedal, and a handlebar arranged on the front column for users to grip.

Although the scooter is easy to use and interests users, it is not convenient to carry because of its structural features. In order to solve these problems, a folding mechanism is usually adopted on the scooter to fold the scooter. Chinese patent CN2425682 disclosed a foldable scooter, which may be shown in Fig. 6. The front column is folded on the pedal unit through the folding mechanism such as a hinge shaft, so that the volume of the scooter becomes smaller. Users may carry the scooter by hand when they do not use it. However, the scooter is very heavy, and users may feel tired after carrying it for a long period of time. So the scooter is still not convenient for carrying.

Patent publication document with No. WO99/00290 disclosed a foldable scooter, wherein the pedal unit and the handlebar are comprised of several separate parts, which can shorten the length of the pedal and the handlebar. The hinge is arranged between the separate parts so that the parts can be pivoted relatively to each other and also can be slid into each other telescopically. Although in this way the size of the scooter may be reduced, so that the scooter may be carried by hand or even put into a bag for more convenience, the drawbacks mentioned above still exist. Because the scooter is heavy, it is difficult and inconvenient to carry. It may also save labor when the scooter is towed by holding the handlebar instead of folding the pedal unit. However, the front wheel and the rear wheel are not located in the line, the scooter may not be towed placidly so that it may incline or turn over. Meanwhile it is also inconvenient to carry.

### Summary of invention

In view of the above-described problems, one of the objectives of the invention is to provide a foldable scooter which may be placidly towed and convenient and easy to carry.

To achieve the above objective, in accordance with one embodiment of the invention, there is provided a foldable scooter, comprising a pedal unit for users, wheels mounted on both ends of the pedal unit, and a steering column arranged on the front of the pedal unit; wherein, the pedal unit comprises a front pedal and a back pedal, both of which are connected with each other through a folding mechanism; and the wheels include a front wheel and a rear wheel, which are fixed on the front pedal and the back pedal, respectively; and the folding mechanism comprises unfolding locking parts for fixing the unfolded front pedal and the unfolded back pedal, and also includes a folding locking part for fixing the folded front pedal and the folded back pedal, and after being folded, the front wheel and rear wheel contact with the ground and roll synchronously, and running tracks of the front wheel and the rear wheel are spaced with certain distance.

In a class of this embodiment, the folding mechanism also comprises a hinge arranged between the front pedal and the back pedal, and the front pedal is foldable around the hinge towards the back pedal, or the back pedal is foldable around the hinge towards the front pedal.

In a class of this embodiment, the orientation that the hinge extends is parallel with the plane in which the pedal unit extends, and forms an acute angle to the connection line between the front wheel and the rear wheel.

In a class of this embodiment, the extending direction of the hinge inclines to the plane in which the pedal unit extends.

In a class of this embodiment, the folding mechanism comprises a hinge shaft, around which the steering column is foldable towards the pedal unit.

In a class of this embodiment, the folding mechanism also comprises a rotating shaft arranged between the front wheel and the rear wheel. The front pedal may be folded towards the back pedal around the rotating shaft, or the back pedal may be folded towards the front pedal around the rotating shaft.

In a class of this embodiment, the orientation that the rotating shaft extends is perpendicular to the plane in which the pedal unit extends.

In a class of this embodiment, the rotating shaft is a pin shaft. The entire front pedal or the entire back pedal may be moved a certain distance along the pin shaft, and the movement of which is in the plane perpendicular to the plane in which the pedal unit extends, and then be rotated around the shaft, so as to fold the pedal unit.

In a class of this embodiment, the distance that the entire front pedal or the entire back pedal moves in the direction perpendicular to the plane that the pedal extends is larger than the thickness of the pedal unit.

In a class of this embodiment, the orientation that the rotating shaft extends inclines to the horizontal plane.

In a class of this embodiment, the folding mechanism further comprises a hinged shaft, around which the steering column is foldable towards the pedal unit.

In a class of this embodiment, the rotating shaft is arranged on one side of the pedal unit.

In a class of this embodiment, the foldable scooter further comprises a regulating mechanism for the wheels, which is arranged at the front wheel or the back wheel.

In a class of this embodiment, the pedal unit is in the shape of polygon or ellipse; and in the vertical plane, the shape of the section formed by the pedal unit perpendicular to the connection line between the front wheel and the back wheel, is triangle, trapezium or polygon.

Advantages of the invention are summarized below:
1. After pedals are folded, the front wheel and the rear wheel contact with the ground and roll synchronously, wherein running tracks of the front wheel and the rear wheel are spaced with certain distance, so that when the scooter is towed, it will not incline or turn over, so that it may move placidly, which is convenient and saving the labor, thereby solving the problem with carrying.
2. That the folding mechanism comprises a hinge arranged between the front pedal and the back pedal, a hinge shaft around which the steering column is foldable towards the pedal unit; and the orientation of the hinge extends is parallel with the plane in which the pedal unit extends, and forms an acute angle to the connection line between the front wheel and the rear wheel may provide a simple structure of the folding mechanism and facilitates the operation.
3. That the folding mechanism comprises a rotating shaft arranged between the front wheel and the rear wheel, a hinge shaft around which the steering column is foldable towards the pedal unit, and the orientation of the rotating shaft extends is perpendicular to the plane in which the pedal unit extends, and the rotating shaft is arranged in the side of the pedal unit, may provide a structure of the folding mechanism, and allow to freely adjust the angle between the folded front wheel and the rear wheel, so as to ensure the scooter can be towed placidly and allow the scooter to be easy to carry.
4. That the folding mechanism comprises a shaft-pin arranged between the front wheel and the rear wheel, a hinge shaft around which the steering column is foldable towards the pedal unit, and the front wheel or the rear wheel can be moved a certain distance in the orientation of the plane in which the shaft-pin is perpendicularly arranged to the pedal unit, and then may rotate around the shaft-pin in order to fold the pedal unit, may provide a simple structure of the folding mechanism so as to allow it easy to be constructed, and further allow to freely adjust the angle between the folded front wheel and the folded rear wheel, so as to ensure that the scooter can be towed placidly.
5. That the pedal unit is the shape of polygon such as parallelogram may facilitate the folding, and also allow the scooter to be towed placidly due to the appropriate orientation of the front pedal and the rear pedal after being folded, and finally may provide a good appearance thereof.

### Drawings of invention

The present invention will be further explained through the following detailed description of the examples thereof and with reference to the accompanying drawings.
Fig.1 is a three-dimensional view of the foldable scooter.
Fig.2a is a vertical view of the foldable scooter with unfolded pedals described in embodiment 1.
Fig.2b is a view of the foldable scooter with folded pedals described in embodiment 1.
Fig.3a is a vertical view of the foldable scooter with unfolded pedals described in embodiment 2.
Fig.3b is a diagram of the foldable scooter with folded pedals described in embodiment 2.
Fig.4a is a vertical view of the foldable scooter with unfolded pedals described in embodiment 3.
Fig.4b is a diagram of the foldable scooter with folded pedals described in embodiment 3.
Fig.5 is a three-dimensional view of the foldable scooter in embodiment 4.
Fig.6a is a vertical view of the foldable scooter with unfolded pedals described in other embodiments.
Fig.6b is a view of the foldable scooter with folded pedals described in other embodiments.
Fig.7a is a section view of the foldable scooter described in other embodiments.
Fig.7b is a view of the foldable scooter with folded pedals described in other embodiments.
Fig.8a is a section view of the foldable scooter described in other embodiments.
Fig.8b is a view of the foldable scooter with folded pedals described in other embodiments.
1-steering column, 2- front pedal, 3- back pedal, 4-front wheel, 5-rear wheel, 6-hinge,7-rotating shaft, 8-shaft-pin, 9-guide pin, 10-guide rail.

### Description of examples

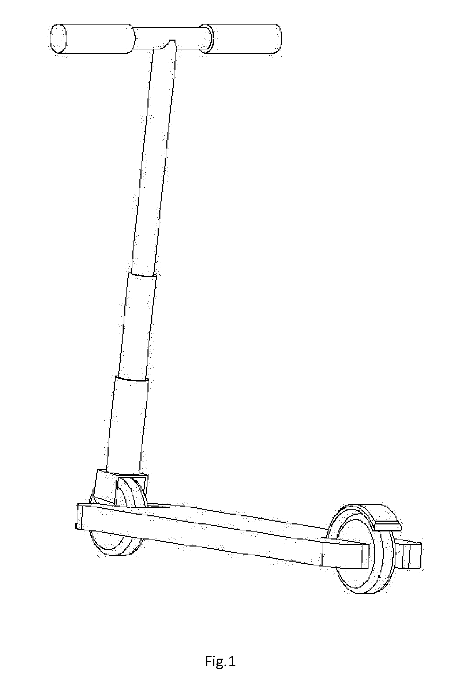

Referring to Fig. 1, a foldable scooter comprises a pedal unit for users, wheels mounted on both ends of the pedal unit, and a steering column 1 arranged in the front of the pedal unit. The pedal unit with rectangle shape comprises a front pedal 2 and a back pedal 3. The wheels comprise a front wheel 4 and a rear wheel 5, which are fixed on the front pedal 2 and the back pedal 3, respectively. The front pedal 2 and the back pedal 3 are connected with each other through a folding mechanism, and both of the wheels contact with the ground after being folded through the folding mechanism and roll synchronously. The rolling direction of the wheels is the same as the running direction of the scooter, wherein running tracks of the front wheel 4 and the rear wheel 5 are spaced with certain distance. The folding mechanism may be of different structures, which will be described in details in the following examples.

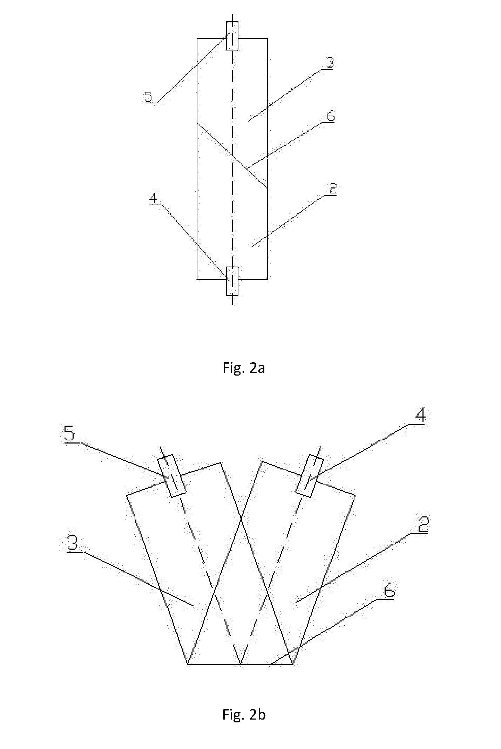

The first embodiment of the invention is shown in Fig.2a that the folding mechanism comprises a hinge arranged between the front pedal 2 and the back pedal 3, unfolding locking parts for fixing the unfolded front pedal 2 and the unfolded back pedal 3, a folding locking part for fixing the folded front pedal 2 and the folded back pedal 3, and a hinge shaft around which the steering column 1 is foldable towards the pedal unit. The hinge shaft is similar to that described in the prior art, and is not necessary to be described here. The orientation that the hinge 6 extends is parallel with the plane in which the pedal unit extends, and forms an acute angle to the connection line between the front wheel 4 and the rear wheel 5. The folded scooter formed by folding the front pedal and the back pedal via the hinge 6 is illustrated in Fig. 2b.

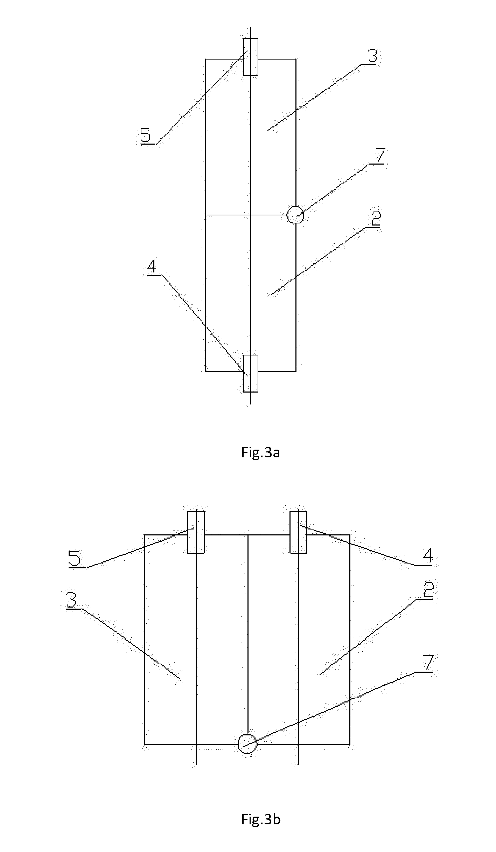

An alternative embodiment of the invention is shown in Fig. 3a that the folding mechanism comprises a rotating shaft 7 arranged between the front pedal 2 and the back pedal 3, unfolding locking parts for fixing the unfolded front pedal 2 and the unfolded back pedal 3, a folding locking part for fixing the folded front pedal 2 and the folded back pedal 3, a hinge shaft around which the steering column 1 is foldable towards the pedal unit. The hinge shaft is similar to that described in the prior art, which is not necessary to be described in detail here. The orientation that the rotating shaft 7 extends is perpendicular to the plane in which the pedal unit extends, and is arranged in one side of the pedal unit. The front pedal 2 and the back pedal 3 after being folded around the rotating shaft 7 are illustrated in Fig. 3b.

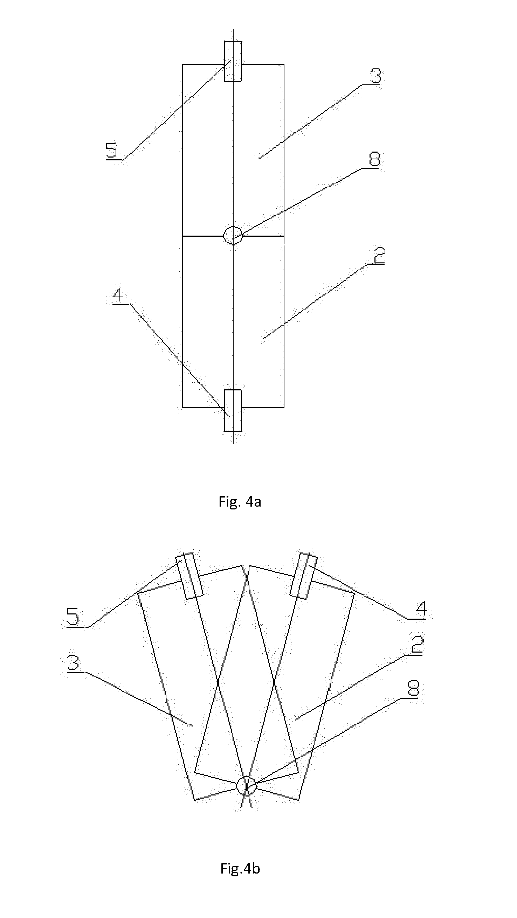

An further alternative embodiment of the invention is shown in Fig. 4a that the folding mechanism comprises a shaft-pin 8 arranged between the front pedal 2 and the back pedal 3, a unfolding locking parts for fixing the unfolded front pedal 2 and the unfolded back pedal 3, a folding locking parts for fixing the folded front pedal 2 and the folded back pedal 3, a hinge shaft around which the steering column is foldable towards the pedal unit. The hinge shaft is similar to that described in the prior art, which will not be described in detail here. In order to fold the pedal unit, the entire front pedal 2 may be moved a certain distance in the direction perpendicular to the plane that said pedal extends, before being rotated around the shaft-pin 8. The distance that the entire front pedal moves in the direction perpendicular to the plane that the pedal extends is larger than the thickness of the pedal unit. The front pedal 2 and the back pedal 3 after being folded around the shaft-pin 8 are illustrated in Fig. 4b. Alternatively, in order to fold the pedal unit, the entire back pedal 2 may be moved a certain distance in the direction perpendicular to the plane that said pedal extends, before being rotated around the shaft-pin 8.

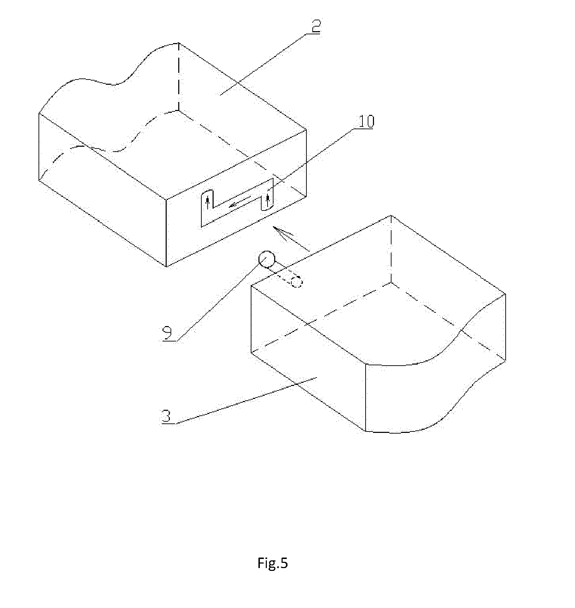

Referring to Fig. 5, the front pedal 2 and the back pedal 3 are separable to each other, and the folding mechanism comprises a guide pin 9 arranged on the back pedal 3, a guide rail 10 arranged on the front pedal 2, at the position corresponding to the guide rail 9; unfolding locking parts for fixing the unfolded front pedal 2 and the unfolded back pedal 3 and a folding locking parts for fixing the folded front pedal 2 and the folded back pedal 3.

The guide pin 9 is adapted to be inserted into the guide rail 10 and may be fixed in the slot of the guide rail 10 through the unfolding locking parts, which is shown through an arrow in the figure. The guide pin 9 slides along the arrow in which the guide rail extends to locking position so as to be locked. The front pedal 2 and the back pedal 3 can be separated when the guide pin moves reversely as the arrow shows. After being separated from each other, the front pedal 2 and the back pedal 3 can be folded through the folding locking parts, and allow the front wheel 4 and the rear wheel 5 to be adapted to roll synchronously in the rolling direction thereof. It is understood that the positions of both the guide pin 9 and the guide rail 10 are exchangeable with each other; specifically, the guide pin 9 is mounted on the front pedal 2 and the guide rail 10 is formed in the back pedal 3.

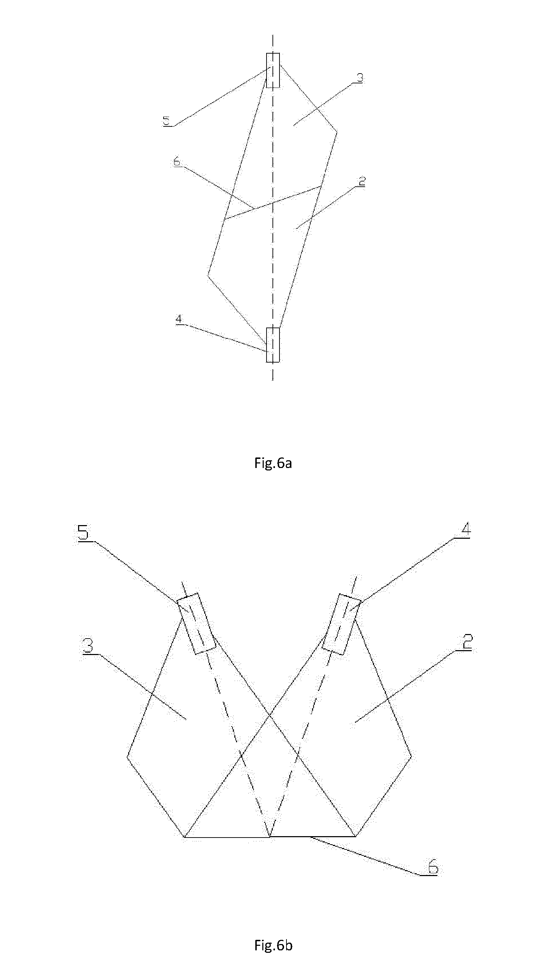

In the other examples, the pedal unit can be in the shape of polygon, such as parallelogram or ellipse. An embodiment of the pedal unit in the shape of parallelogram after being folded is illustrated in Fig. 6a and Fig. 6b. The polygon shaped pedal unit may allow ease of operation after being folded without any affection to the use for recreation. The rolling direction of the front wheel 4 and the rear wheel 5 of the folded pedal unit is advantage for being towed placidly and also provides a good appearance of the folded scooter.

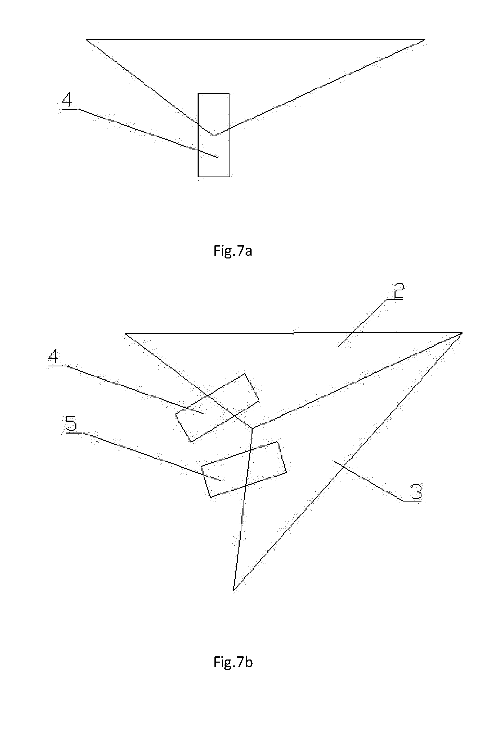

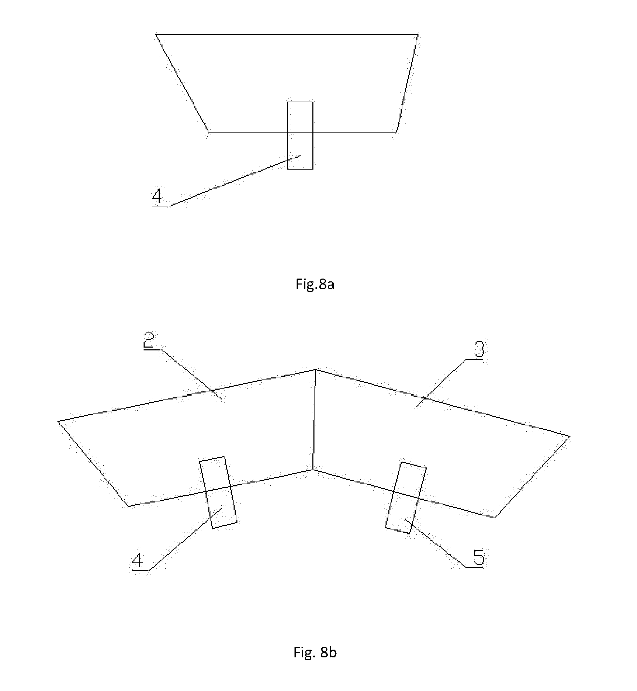

There are some other alternative embodiments of the invention, in which, in the vertical plane, the section of the pedal is in the shape of triangle (shown in Fig.7a) or in the shape of other types of polygon such as trapezium (shown in Fig.8a), which is perpendicular to the connection line of the front wheel 4 and the rear wheel 5. The folding mechanism is arranged on one side of the triangle or the trapezium-shaped section, which is shown as the folding line in the Figure, and Fig.7b and Fig.8b illustrate the folded pedal unit, of which the front pedal 2 or the back pedal 3 are folded through the folding mechanism, wherein the folding mechanism may be in the form of any one of the above mentioned examples.

In alternative embodiments of the invention, in order to allow the front wheel 4 and the rear wheel 5 to form a reliable contact with the ground and then roll synchronously, and the running tracks of the front wheel 4 and the rear wheel 5 are spaced with a certain distance, a regulating mechanism for the wheels may be further arranged on the front wheel 4 or the rear wheel 5. After the pedal unit is folded, the regulating mechanism may regulate the orientation of the front wheel 4 and the rear wheel 5, so as to allow the foldable scooter to be towed easily and placidly.

The pedal unit of the foldable scooter of the present invention may be made of glass fibre reinforced plastics (GFRP), so as to gain a small weight, high rigidity and good appearance of the scooter without reducing the thickness of the pedal unit.

While this invention has been described as having a preferred design, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A foldable scooter, comprising a pedal unit for users, wheels mounted on both ends of said pedal unit, and a steering column arranged on the front of said pedal unit; wherein, said pedal unit comprises a front pedal and a back pedal, both of which are connected with each other through a folding mechanism; and said wheels include a front wheel and a rear wheel, which are fixed on said front pedal and said back pedal, respectively; and said folding mechanism comprises unfolding locking parts for fixing the unfolded front pedal and the unfolded back pedal, and also includes a folding locking part for fixing the folded front pedal and the folded back pedal, and said scooter is **characterized in that** after being folded, said front wheel and said rear wheel contact with the ground and roll synchronously, and running tracks of said front wheel and said rear wheel are spaced with certain distance; and said folding mechanism further comprises a hinge arranged between said front pedal and said back pedal, and said front pedal is foldable around said hinge towards said back pedal, or said back pedal is foldable around said hinge towards said front pedal; and the orientation that said hinge extends is parallel with the plane in which said pedal unit extends, and forms an acute angle to the connection line between said front wheel and said rear wheel.

2. A foldable scooter according to claim 1, is **characterized in that** said folding mechanism comprises a hinge shaft, around which said steering column is foldable towards said pedal unit.
